# EUROPEAN PATENT SPECIFICATION

(11) **EP 1 630 977 B1**
(45) Date of publication and mention of the grant of the patent: **18.10.2006**
(21) Application number: 04255066.5
(22) Date of filing: 23.08.2004
(51) Int. Cl.: H04B 7/10, H01Q 9/04, H01Q 21/24

(54) **Mobile wireless communications device with polarization diversity wireless local area network (LAN) antenna and related method**
Mobiles Funkkommunikationsgerät mit Polarisationsdiversitätsantenne in lokalen drahtlosen Netzwerken und entsprechendes Verfahren
Dispositif de communication mobile sans fil avec antenne à diversité de polarisation d'un réseau d'accès local sans fil et méthode

(43) Date of publication of application: 01.03.2006
(73) Proprietor: Research In Motion Limited, Waterloo, Ontario N2L 3W8 (CA)
(72) Inventor: Qi, Yihong, Waterloo, Ontario, N2T 2H3 (CN); Man, Ying Tong, Kitchener, Ontario, N2M 5G1 (CN); Jarmuszewski, Perry, Waterloo, Ontario, N2L 2N7 (CN); Cooke, Adrian, Kitchener, Ontario, N2A 4B5 (CN)
(74) Representative: Hibbert, Juliet Jane Grace

(56) References cited:
- EP-A- 0 689 301
- EP-A- 1 189 304
- WO-A-03/063290
- US-A- 6 031 503
- PATENT ABSTRACTS OF JAPAN vol. 2000, no. 01, 31 January 2000 (2000-01-31) & JP 11 274827 A (AIWA CO LTD), 8 October 1999 (1999-10-08)
- PATENT ABSTRACTS OF JAPAN vol. 2002, no. 04, 4 August 2002 (2002-08-04) & JP 2001 352214 A (HITACHI CABLE LTD), 21 December 2001 (2001-12-21)

## Description

### Field of the Invention

The present invention relates to the field of communications systems, and, more particularly, to wireless communications systems and related methods.

### Background of the Invention

Computers are often connected together as part of a Local Area Network (LAN). The LAN permits computers to share data and programs with one another. Many typical LANs are based upon physical connections between individual computers and a server, for example. The connections may be twisted pair conductors, coaxial cables, or optical fibers, for example.

There is also another class of LAN based upon wireless communication to the individual computers. A wireless LAN is not restricted to having physical connections to the individual computers. Accordingly, original installation may be simplified. Additionally, one or more of the computers may be used in a mobile fashion. In other words, the user may use a laptop computer and move from place to place while still being connected via the wireless LAN.

Various standards have been created to define operating protocols for wireless LANs, such as the IEEE 802.11 and Bluetooth standards. The IEEE 802.11 standard, for example, defines the protocol for several types of networks including ad-hoc and client/server networks. An ad-hoc network is a network where communications are established between multiple stations in a given coverage area without the use of an access point or server. The standard provides methods for arbitrating requests to use the medium to ensure that throughput is maximized for all of the users in the base service set. Another widely used wireless LAN format is Bluetooth.

The client/server network uses an access point that controls the allocation of transmit time for all stations and allows mobile stations to roam from one access point to another. The access point is used to handle traffic from the mobile radio to the wired or wireless backbone of the client/server network. This arrangement allows for point coordination of all of the stations in the basic service area and ensures proper handling of the data traffic. The access points route data between each station and other wired/wireless stations, or to and from the network server (i.e., a base station). Of course, two or more LANs may be interconnected using wireless LAN devices at respective access points. This may be considered a network bridge application.

One of the challenges of wireless LAN implementation is designing suitable antennas that can provide desired performance characteristics, yet are relatively small in size to fit within mobile devices. For example, with wireless LAN devices such as laptop computers, it is desirable to keep the overall size of the laptop as small as possible. Furthermore, internal antennas are generally preferred over external antennas, as externally mounted antennas take up more space and may be damaged while traveling, etc.

One example of a wireless LAN antenna that is implemented on a PMCIA card to be inserted in a PMCIA slot of a laptop computer is disclosed in U.S. Patent No. 6,031,503 to Preiss, II et al. The antenna assembly includes two folded, U-shaped antennas, which may be dipoles or slot radiators, that are disposed orthogonally to one another to provide polarization diversity. Polarization diversity means that signals are transmitted and received on two different polarizations to increase the likelihood that the signal is received. Signals are carried to and from the antenna by microstrip feed lines. The microstrip lines are placed off center along each antenna slot to establish an acceptable impedance match for the antenna, and the feed lines are coupled to the communications card by coaxial cables.
EP-A-1 189 304 discloses a LAN-card using polarisation diversity with two antennas having different shapes.

There is an increasing trend toward using other portable, handheld communications devices in wireless LANs which are even smaller than laptops, such as personal digital assistants (PDAs), for example. Accordingly, with even more restrictive space constraints for such handheld devices, there is a need for antennas which are appropriately sized for such applications yet still provide desired performance characteristics.

### Summary of the Invention

In view of the foregoing background, it is therefore an object of the present invention to provide a mobile wireless communications device with a wireless LAN antenna providing polarization diversity as well as other desired signal characteristics and related methods.

This and other objects, features, and advantages in accordance with the present invention are provided by a mobile wireless local area network (LAN) communications device including a polarization diversity wireless LAN antenna. More particularly, the mobile wireless LAN communications device may include a portable, handheld housing, and a wireless LAN transceiver carried by the housing. The polarization diversity wireless LAN antenna may be for cooperating with the wireless LAN transceiver to communicate over a wireless LAN. Moreover, the polarization diversity wireless LAN antenna may include a first antenna element coupled to the wireless LAN transceiver having a first shape and a first polarization. The antenna may further include a second antenna element coupled to the wireless LAN transceiver having a second shape different from the first shape and a second polarization different from the first polarization.

The first and second antenna elements may have different gain patterns, and the different gain patterns may have a substantially equal main lobe gain. Further, the first and second polarizations may be substantially orthogonal to one another. At least one of the first and second antenna elements may include a feed branch and a loop branch having a first end coupled to the feed branch, a second end adjacent the feed branch and separated therefrom by a gap, and a loop-back section extending between the first and second ends. More specifically, the feed branch may include first and second feed points. The first end of the loop branch may be coupled to the first feed point, and the second end of the loop branch may be adjacent the second feed point. Also, the loop-back section of the loop branch may include at least one arcuate portion.

A circuit board may be carried by the housing having first and second opposing major surfaces. The first and second antenna elements may be planar conductive elements on the first major surface of the circuit board. In addition, a matching network may be coupled between the wireless LAN transceiver and the at least one of the first and second antenna elements. The mobile wireless LAN communications device may also include a cellular transceiver carried by the portable, handheld housing, and a cellular antenna for cooperating with the cellular transceiver to communicate over a cellular communications network.

A wireless LAN communications method aspect of the invention may include providing a polarization diversity wireless LAN antenna, such as the one described briefly above, and communicating signals over a wireless LAN via the first antenna element at a first polarization, and via the second antenna element at a second polarization different from the first polarization.

### Brief Description of the Drawings

FIG. 1 is schematic block diagram of a wireless local area network (LAN) including a mobile wireless communications device in accordance with the present invention.

FIG. 2 is a more detailed schematic block diagram of the wireless LAN transceiver and polarization diversity antenna of the mobile wireless communications device of FIG. 1.

FIG. 3 is an enlarged rear elevational view of a portion of the mobile wireless communications device of FIG. 1 with the housing removed illustrating the polarization diversity antenna thereof in greater detail.

FIG. 4 is an enlarged rear elevational view of an alternate embodiment of the conductors of the polarization diversity antenna of FIG. 3.

FIG. 5 is schematic block diagram of an alternate embodiment of the mobile wireless communications device of FIG. 1.

FIG. 6 is a schematic block diagram of an exemplary mobile wireless communications device for use with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime and multiple prime notation are used to indicate similar elements in alternate embodiments.

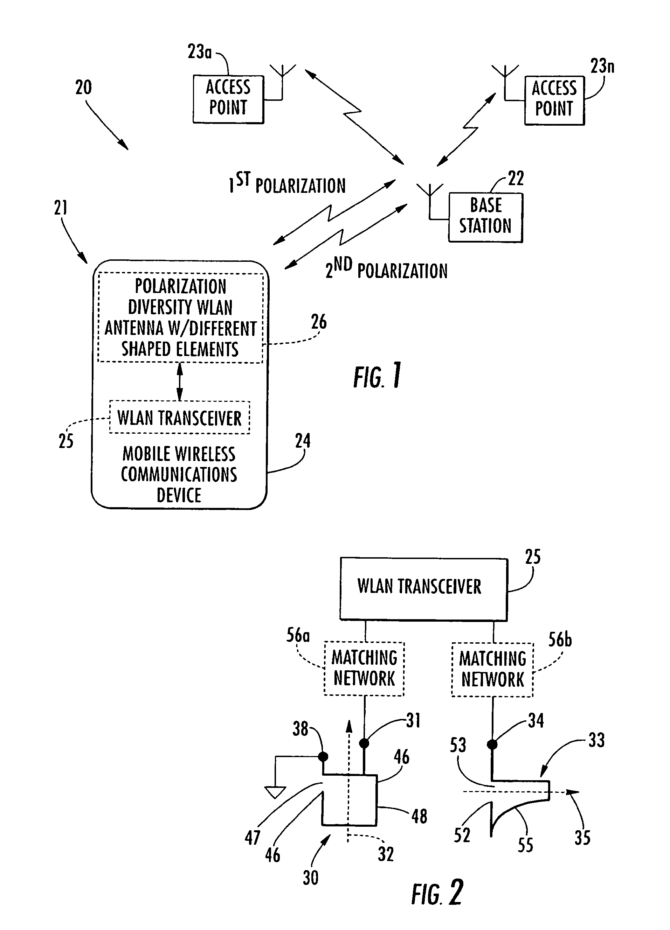

Referring initially to FIG. 1, a wireless local area network (LAN) **20** including a mobile wireless communications device **21** in accordance with the present invention is first described. The wireless LAN **20** also illustratively includes a base station **22**, and a plurality of access point devices **23a-23n**, which may be any type of wireless LAN enabled devices (including other mobile wireless communications devices **21**), as will be appreciated by those skilled in the art. While only the single base station **22** is shown for clarity of illustration, multiple base stations may be included in some embodiments. The wireless LAN **20** may operate in accordance with various wireless LAN standards, such as IEEE 802.11/802.11b or Bluetooth, for example, as will also be appreciated by those skilled in the art.

The mobile wireless communications device **21** illustratively includes a portable, handheld housing **24,** and a wireless LAN transceiver **25** carried by the portable, handheld housing. The device **20** also illustratively includes a polarization diversity wireless LAN antenna **26** for cooperating with the wireless LAN transceiver **25** to communicate over the wireless LAN **20,** as will be discussed further below. More particularly, the device **20** may be a PDA-type device in which the wireless LAN transceiver and antenna **26** cooperate to communicate various types of data, such as voice data, video data, text (e.g., email) data, Internet data, etc. over the wireless LAN **20.** More specifically, the antenna **26** may be used for placing telephone calls over the wireless LAN **20,** in which case the device **21** may generally take the form or shape of a typical cellular telephone or a cellular-enabled PDA device, for example.

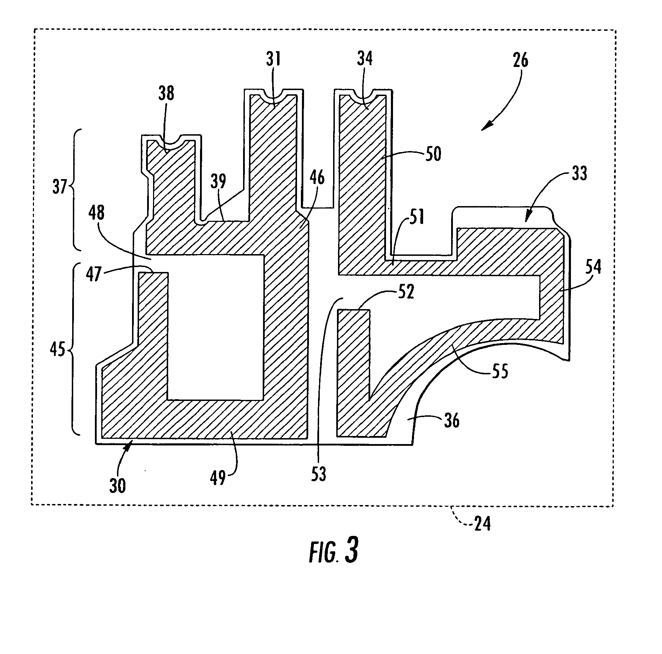

Turning additionally to FIGS. 2 and 3, the polarization diversity wireless LAN antenna **26** illustratively includes a first antenna element **30** coupled to the wireless LAN transceiver **25** at a feed point **31** and having a first shape and a first polarization. More particularly, the peak antenna gain for the first antenna element **30** is directed normal to the plane thereof, and the polarization of the element is a substantially vertical polarization, as illustrated with a dashed arrow **32.**

The antenna **26** also illustratively includes a second antenna element **33** coupled to the wireless LAN transceiver **25** at a feed point **34.** The second antenna element **33** has a second shape different from the first shape of the first antenna element **30.** Furthermore, the second antenna element **33** also has a second polarization different from the first polarization. In particular, the peak antenna gain for the second antenna element **33** is also directed normal to the plane thereof, and its polarization is a substantially horizontal polarization, as illustrated with a dashed arrow **35.** That is, the polarizations of the first and second antenna elements **30, 33** are preferably orthogonal to one another, as shown, to provide maximum polarization diversity, as will be appreciated by those skilled in the art. Of course, other arrangements may be possible in other embodiments.

The first and second antenna elements **30, 33** may advantageously be implemented as planar, printed conductive elements on a circuit board **36.** The circuit board may be mounted on the back side of the device **21** (i.e., the side pointing away from the user when holding the device to place a telephone call) at the top of the device (i.e., adjacent the end of the device with the ear speaker). The first and second antenna elements **30, 33** are shown with hatching to provide greater clarity of illustration. Moreover, it should also be noted that the illustration of the first and second antenna elements **30, 33** shown in FIG. 2 is merely schematic in nature, with the actual layouts of these elements being shown in greater detail in FIG. 3. The first antenna element **30** illustratively includes a feed branch **37** including the first feed point **31,** a second feed point **38** which is connected to ground (FIG. 2), and a feed section **39** connected between the first and second feed points.

The first antenna element **30** further illustratively includes a loop branch **45** having a first end **46** coupled to the feed section **39** adjacent the first feed point **31.** A second end **47** of the loop branch **45** is spaced apart from the feed section **39** by a gap **48,** and the second end is adjacent the second feed point **38.** A loop-back section **49** extends between the first and second ends **46, 47.** More specifically, the loop-back section **49** generally loops in a clockwise direction from the first end **46** to the second end **47,** as shown. The first antenna element **30** thus generally defines a dual feed point, open loop configuration. This configuration advantageously provides increased space savings (i.e., reduced antenna footprint), as will be appreciated by those skilled in the art.

The second antenna element **33** also illustratively includes a feed branch defined by the feed point **34** and a feed section **50.** Further, a loop branch having a first end **51** coupled to the feed section **50,** a second end **52** adjacent the feed branch and separated therefrom by a gap **53,** and a loop-back **54** section extending between the first and second ends. The loop-back section **54** illustratively includes an arcuate portion **55.** The second antenna element **33** thus defines a single feed point, open loop element configuration. Again, this provides space savings, and, thus, reduced antenna footprint.

As will be appreciated by those skilled in the art, various design parameters (e.g., widths, lengths, loop shapes, notches, etc.) may be altered in the first and second antenna elements **30, 33** to provide different signal characteristics. By way of example, the overall dimensions of the first and second antenna elements **30, 33** may be 2 to 3 cm high by 2 to 3 cm wide for each element, although other dimensions may also be used. The elements **30, 33** preferably operate over a wireless LAN frequency range of about 2.4 to 2.5 GHz, for example, although other frequencies are also possible. Moreover, the coupling between the first and second elements **30, 33** may also be adjusted to provide desired performance characteristics. By way of example, a preferred coupling distance or gap between the first and second elements **30, 33** may be in a range of about 3 to 7 mm, although other gap distances may also be used as appropriate for different embodiments.

Because the first and second antenna elements **30, 33** have different shapes, they will also have different gain patterns, and thus advantageously provide pattern diversity, as will be appreciated by those skilled in the art. Moreover, the first and second antenna elements **30, 33** are preferably tuned to have substantially equal main lobe gain for enhanced performance. Of course, it will be appreciated that other antenna element shapes or types may be used in addition to those noted above. Matching networks **56a, 56b** may optionally be coupled between the wireless LAN transceiver **25** and the first and second antenna elements **30, 33,** respectively, as shown in FIG. 2, if desired, as will be appreciated by those skilled in the art. Moreover, electromagnetic shielding may be placed over one or both sides of the circuit board **36** as necessary in certain applications, as will also be appreciated by those skilled in the art.

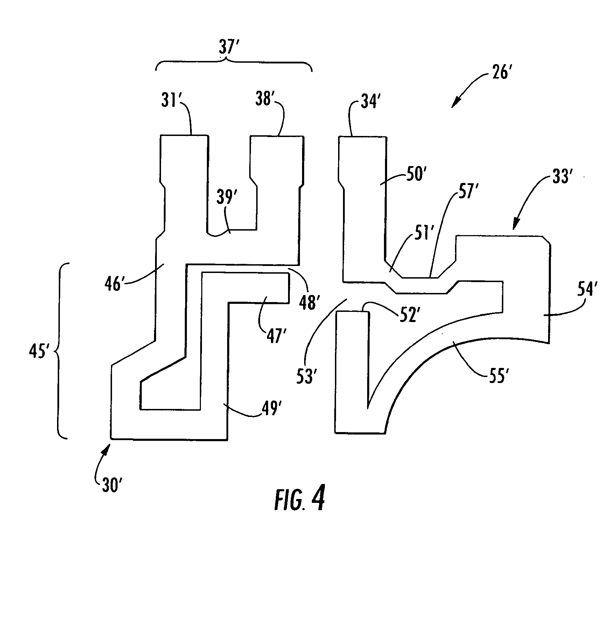

An alternate embodiment of the polarization diversity wireless LAN antenna **26'** is shown in FIG. 4. Here, the first and second feed points **31'**, **38'** of the first antenna element **30'** are flipped left to right, and the loop-back section **45'** loops back in a generally counterclockwise direction, as shown, in contrast to the first antenna element **30.** The second antenna element **33** is substantially the same shape as described above, except that the end of the loop-back section **54'** near the first end **51'** has an offset portion **57'.**

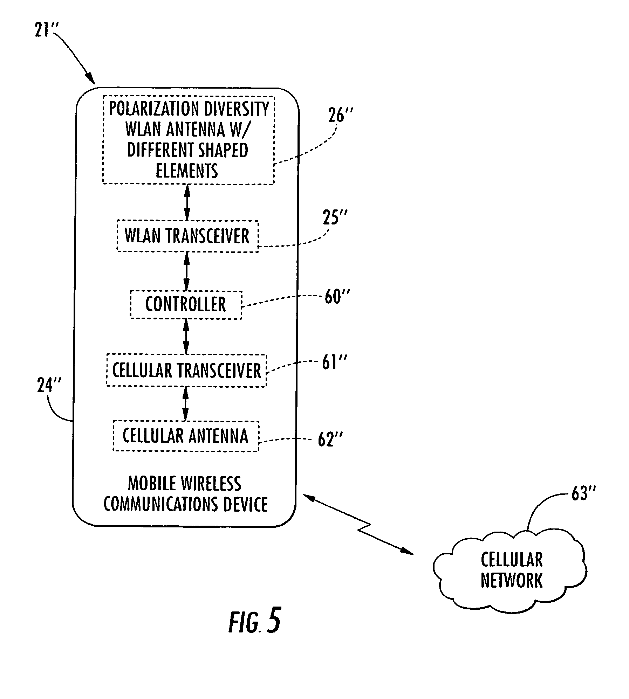

Turning additionally to FIG. 5, an alternate embodiment of the mobile wireless communications device **21''** further illustratively includes a controller **60''**, a cellular transceiver **61''**, and a cellular antenna **62''** all carried by the portable, handheld housing **24''**. The cellular antenna **62''** and cellular transceiver **61''** cooperate to communicate data such as voice data, text (e.g., email) data, video data, Internet data, etc., over a cellular communications network **63'',** as will be appreciated by those skilled in the art. The controller **60''** advantageously interfaces with the wireless LAN and cellular transceivers **25'', 61''** for coordinating the communication of such data over the wireless LAN **20** (FIG. 1) and/or the cellular network **63''**. The controller **60''** may be implemented with a microprocessor and various software modules (e.g., email module, telephone module, calendar module, address book module, etc.), as will be discussed further below.

A wireless LAN communications method aspect of the invention may include providing the polarization diversity wireless LAN antenna **26,** as described above, and communicating signals over the wireless LAN **20** via the first antenna element **30** at a first polarization, and via the second antenna element **33** at a second polarization different from the first polarization. Additional method aspects will be appreciated by those skilled in the art from the foregoing description.

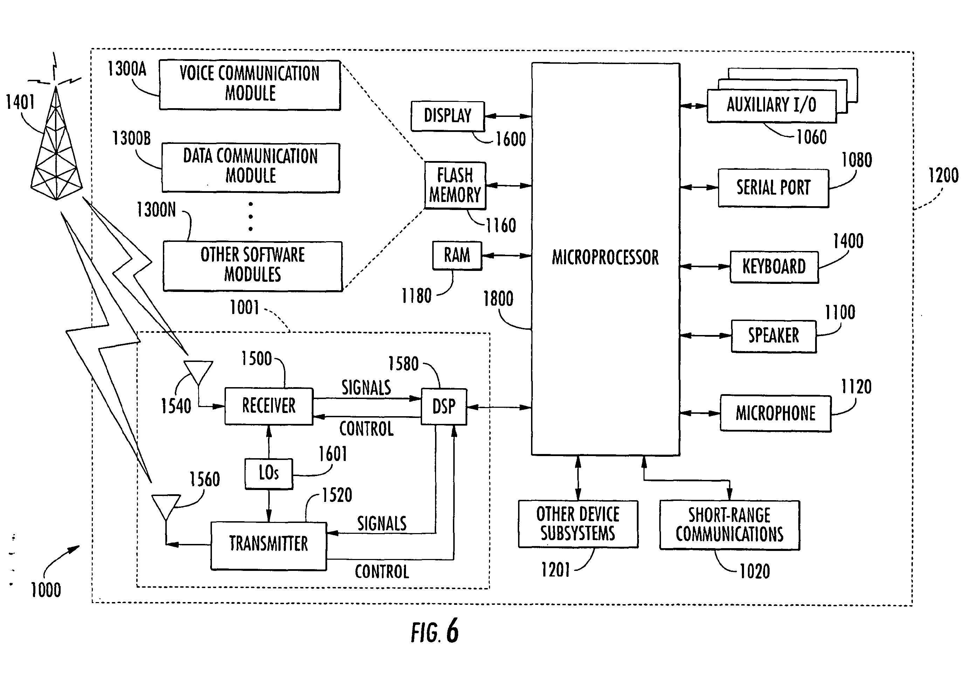

Another example of a handheld mobile wireless communications device **1000** that may be used in accordance the present invention is further described with reference to FIG. 6. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800**, other parts of the mobile device **1000** are shown schematically in FIG. 6. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800**, in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless local area network (LAN) communications device (21) comprising:
a portable, handheld housing (24);
a wireless LAN transceiver (25)carried by said portable, handheld housing; and
a polarization diversity wireless LAN antenna (26) for cooperating with said wireless LAN transceiver to communicate over a wireless LAN (20), said polarization diversity wireless LAN antenna comprising
a first antenna element (30) coupled to said wireless LAN transceiver having a first shape and a first polarization, and
a second antenna element (33) coupled to said wireless LAN transceiver having a second shape different from the first shape and a second polarization different from the first polarization,
said first and second antenna elements having different gain patterns, and the different gain patterns having a substantially equal main lobe gain.

2. The mobile wireless LAN communications device (21) of Claim 1 wherein the first and second polarizations are substantially orthogonal to one another.

3. The mobile wireless LAN communications device (21) of Claim 1 wherein at least one of said first and second antenna elements (30, 33) comprises:
a feed branch (37); and
a loop branch (45)having a first end (46, 51) coupled to said feed branch, a second end (47, 52) adjacent said feed branch and separated therefrom by a gap (48, 53), and a loop-back section (49, 54)extending between the first and second ends.

4. The mobile wireless LAN communications device (21) of Claim 3 wherein said feed branch (37) comprises first and second feed points (31, 38) wherein the first end (46) of said loop branch (45) is coupled to the first feed point, and wherein the second end (47) of said loop branch is adjacent the second feed point.

5. The mobile wireless LAN communications device (21) of Claim 3 wherein said loop-back section (54) of said loop branch (45) comprises at least one arcuate portion (55).

6. The mobile wireless LAN communications device (21") of Claim 1 further comprising:
a cellular transceiver (61")carried by said portable, handheld housing (24); and
a cellular antenna (62'') for cooperating with said cellular transceiver to communicate over a cellular communications network (63").

7. The mobile wireless LAN communications device (21) of Claim 1 further comprising a circuit board (36)carried by said housing (24) and having first and second opposing major surfaces; and wherein said first and second antenna elements (30, 33) comprise planar conductive elements on the first major surface of said circuit board.

8. The mobile wireless LAN communications device (21) of Claim 1 further comprising a matching network (56a, 56b)coupled between said wireless LAN transceiver (25) and at least one of said first and second antenna elements (30, 33).

9. A wireless local area network (LAN) communications method comprising:
providing a polarization diversity wireless LAN antenna (26) comprising a first antenna element (30)having a first shape, and a second antenna element (33) having a second shape different from the first shape; and
communicating signals over a wireless LAN (20)via the first antenna element at a first polarization, and via the second antenna element at a second polarization different from the first polarization, the first and second antenna elements having different gain patterns, and the different gain patterns having a substantially equal main lobe gain.

10. The method of Claim 9 wherein the first and second polarizations are substantially orthogonal to one another

11. The method of Claim 9 wherein at least one of the first and second antenna elements (30, 33) comprises:
a feed branch (37); and
a loop branch (45) having a first end (46, 51) coupled to the feed branch, a second end (47, 52) adjacent the feed branch and separated therefrom by a gap (48, 53), and a loop-back section (49, 54) extending between the first and second ends.

12. The method of Claim 11 wherein the feed branch (37) comprises first and second feed points (31, 38), wherein the first end (46) of the loop branch (45) is coupled to the first feed point, and wherein the second end of the loop branch is adjacent the second feed point.

13. The method of Claim 11 wherein the loop-back section (49) of the loop branch (45) comprises at least one arcuate portion (55).

## Patentansprüche

1. Kommunikationsgerät (21) für ein mobiles drahtloses Nahbereichsnetzwerk (local area network, LAN), welches Kommunikationsgerät aufweist:
ein tragbares Handgerät-Gehäuse (24);
ein Sende-/Empfangsgerät (25) für ein drahtloses LAN, das in dem tragbaren Handgerät-Gehäuse untergebracht ist; und
eine Polarisations-Diversity-Antenne (26) für drahtloses LAN, für eine Zusammenarbeit mit dem Sende-/Empfangsgerät für ein drahtloses LAN um über ein drahtloses LAN (20) zu kommunizieren, wobei die Polarisations-Diversity-Antenne für drahtloses LAN aufweist:
ein erstes Antennenelement (30), welches an das Sende-/Empfangsgerät für ein drahtloses LAN gekoppelt ist welches Element eine erste Form und eine erste Polarisation aufweist, und
ein zweites Antennenelement (33), welches an das Sende-/Empfangsgerät für ein drahtloses LAN gekoppelt ist welches Element eine von der ersten Form unterschiedliche zweite Form und eine von der ersten Polarisation unterschiedliche zweite Polarisation aufweist,
wobei die ersten und zweiten Antennenelemente unterschiedliche Verstärkungsmuster aufweisen, und die unterschiedlichen Verstärkungsmuster eine im wesentlichen gleiche Hauptkeulenverstärkungen aufweisen.

2. Kommunikationsgerät (21) für ein mobiles drahtloses LAN nach Anspruch 1, wobei die ersten und zweiten Polarisationen im Wesentlichen orthogonal zueinander sind.

3. Kommunikationsgerät (21) für ein mobiles drahtloses LAN nach Anspruch 1, wobei zumindest eines der ersten und zweiten Antennenelemente (30, 33) aufweist:
einen Einspeisungszweig (37); und
einen Schleifenzweig (45), welcher ein erstes Ende (46, 51), das an den Einspeisungszweig gekoppelt ist, ein zweites Ende (47, 52), das dem Einspeisungszweig benachbart ist und von diesem durch einen Spalt (48, 53) getrennt ist, und einen Rückschleifenabschnitt (49, 54), welcher sich zwischen ersten und zweiten Enden erstreckt, aufweist.

4. Kommunikationsgerät (21) für ein mobiles drahtloses LAN nach Anspruch 3, wobei der Einspeisungszweig (37) erste und zweite Einspeisungspunkte (31, 38) aufweist, wobei das erste Ende (46) des Schleifenzweiges (45) an den ersten Einspeisungspunkt gekoppelt ist, und wobei das zweite Ende (47) des Schleifenzweiges an den zweiten Einspeisungspunkt angrenzt.

5. Kommunikationsgerät (21) für ein mobiles drahtloses LAN nach Anspruch 3, wobei der Rückschleifenabschnitt (54) des Schleifenzweiges (45) zumindest einen bogenförmigen Teil (55) aufweist.

6. Kommunikationsgerät (21") für ein mobiles drahtloses LAN nach Anspruch 1, welches weiters aufweist:
ein zellulares Sende-/Empfangsgerät (61") das in dem tragbaren Handgerät-Gehäuse (24) untergebracht ist; und
eine zellulare Antenne (62") für eine Zusammenarbeit mit dem zellularen Sende-/Empfangsgerät um über ein zellulares Kommunikationsnetzwerk (63") zu kommunizieren.

7. Kommunikationsgerät (21) für ein mobiles drahtloses LAN nach Anspruch 1, welches weiters ein Platine (36) aufweist, die in dem Gehäuse (24) untergebracht ist und welche erste und zweite gegenüberliegende Hauptoberflächen aufweist; und wobei die ersten und zweiten Antennenelemente (30, 33) flache, leitfähige Elemente auf der ersten Hauptoberfläche der Platine aufweisen.

8. Kommunikationsgerät (21) für ein mobiles drahtloses LAN nach Anspruch 1, welches weiters ein Anpassglied (56a, 56b) aufweist, welches zwischen das Sende-/Empfangsgerät (25) für ein drahtloses LAN und zumindest eines von den ersten und den zweiten Antennenelementen (30, 33) gekoppelt ist.

9. Kommunikationsverfahren für ein drahtloses Nahbereichnetzwerk (LAN) welches Verfahren aufweist:
Bereitstellen einer Polarisations-Diversity-Antenne (26) für drahtloses LAN, welche aufweist: ein erstes Antennenelement (30), welches eine erste Form aufweist, und ein zweites Antennenelement (33), welches eine zweite Form aufweist, die von der ersten Form unterschiedlich ist; und
Übermitteln von Signalen über ein drahtloses LAN (20) über das erste Antennenelement in einer ersten Polarisation, und über das zweite Antennenelement in einer von der ersten Polarisation unterschiedlichen zweiten Polarisation, wobei die ersten und zweiten Antennenelemente unterschiedliche Verstärkungsmuster aufweisen, und die unterschiedlichen Verstärkungsmuster eine im wesentlichen gleiche Hauptkeulenverstärkungen aufweisen.

10. Verfahren nach Anspruch 9, wobei die ersten und zweiten Polarisationen im Wesentlichen orthogonal zueinander sind.

11. Verfahren nach Anspruch 9, wobei zumindest eines der ersten und zweiten Antennenelemente (30, 33) aufweisen:
einen Einspeisungszweig (37); und
einen Schleifenzweig (45), welcher ein erstes Ende (46, 51), das an den Einspeisungszweig gekoppelt ist, ein zweites Ende (47, 52), das an den Einspeisungszweig angrenzt und von diesem durch einen Spalt (48, 53) getrennt ist, und einen Rückschleifenabschnitt (49, 54), welche sich zwischen erstem und zweitem Ende erstreckt, aufweist.

12. Verfahren nach Anspruch 11, wobei der Einspeisungszweig (37) erste und zweite Einspeisungspunkte (31, 38) aufweist, wobei das erste Ende (46) des Schleifenzweiges (45) an den ersten Einspeisungspunkt gekoppelt ist, und wobei das zweite Ende des Schleifenzweiges dem zweiten Einspeisungspunkt benachbart ist.

13. Verfahren nach Anspruch 11, wobei der Rückschleifenabschnitt (49) des Schleifenzweiges (45) zumindest einen bogenförmigen Teil (55) aufweist.

## Revendications

1. Dispositif (21) de communication de réseau local (LAN) sans fil comprenant :
un boîtier portable, portatif (24) ;
un émetteur-récepteur LAN sans fil (25) logé dans ledit boîtier portable, portatif ; et
une antenne pour réseau LAN sans fil à diversité de polarisation (26) pour coopérer avec ledit émetteur-récepteur LAN sans fil (20), ladite antenne pour réseau LAN sans fil à diversité de polarisation comprenant
un premier élément d'antenne (30) couplé audit émetteur-récepteur LAN sans fil ayant une première forme et une première polarisation, et
un deuxième élément d'antenne (33) couplé audit émetteur-récepteur LAN sans fil ayant une deuxième forme différente de la première forme et une deuxième polarisation différente de la première polarisation,
lesdits premier et deuxième éléments d'antenne ayant différents diagrammes de gain, et les différents diagrammes de gain ayant un gain sensiblement égal dans le lobe de rayonnement principal.

2. Dispositif mobile de communication LAN sans fil (21) selon la revendication 1 dans lequel les première et la deuxième polarisations sont sensiblement orthogonales l'une par rapport à l'autre.

3. Dispositif mobile de communication LAN sans fil (21) selon la revendication 1 dans lequel au moins un desdits premier et deuxième éléments d'antenne (30, 33) comprend :
une branche de source primaire (37) ; et
une branche en boucle (45) ayant une première extrémité (46, 51) couplée à ladite branche de source primaire, une deuxième extrémité (47, 52) adjacente à ladite branche de source primaire et séparée d'elle par un intervalle (48, 53) et une section de boucle de retour (49, 54) s'étendant entre les première et la deuxième extrémités.

4. Dispositif mobile de communication LAN sans fil (21) selon la revendication 3 dans lequel ladite branche de source primaire (37) comprend des premier et deuxième points de source primaire (31, 38) dans lequel la première extrémité (46) de ladite branche de boucle (45) est couplée au premier point de source primaire, et dans lequel la deuxième extrémité (47) de ladite branche de boucle est adjacente au deuxième point de source primaire.

5. Dispositif mobile de communication LAN sans fil (21) selon la revendication 3 dans lequel ladite section de boucle de retour (54) de ladite branche de boucle (45) comprend au moins une partie arquée (55).

6. Dispositif mobile de communication LAN sans fil (21") selon la revendication 1 comprenant en outre :
un émetteur-récepteur cellulaire (61") logé dans ledit boîtier portable, portatif (24) ; et
une antenne cellulaire (62") pour coopérer avec ledit émetteur-récepteur cellulaire pour communiquer à travers un réseau de communication cellulaire (63").

7. Dispositif mobile de communication LAN sans fil (21) selon la revendication 1 comprenant en outre une carte de circuit imprimé (36) logée dans ledit boîtier (24) et ayant une première et une deuxième surface principales opposées ; et dans lequel lesdits premier et deuxième éléments d'antenne (30, 33) comprennent des éléments conducteurs planaires sur la première surface principale de ladite carte de circuit imprimé.

8. Dispositif mobile de communication LAN sans fil (21) selon la revendication 1 comprenant en outre un réseau adaptateur (56a, 56b) couplé entre ledit émetteur-récepteur LAN sans fil (25) et au moins un desdits premier et deuxième éléments d'antenne (30, 33).

9. Procédé de communication de réseau local (LAN) sans fil comprenant :
une antenne pour réseau LAN sans fil fournissant une diversité de polarisation (26) comprenant un premier élément d'antenne (30) ayant une première forme et un deuxième élément d'antenne (33) ayant une deuxième forme différente de la première forme ; et
des signaux de communication à travers un LAN sans fil (20) via le premier élément d'antenne à une première polarisation, et via le deuxième élément d'antenne à une deuxième polarisation différente de la première polarisation, les premier et le deuxième éléments d'antenne ayant différents diagrammes de gain, et les différents diagrammes de gain ayant un gain sensiblement égal dans le lobe de rayonnement principal.

10. Procédé selon la revendication 9 dans lequel les première et la deuxième polarisations sont sensiblement orthogonales l'une par rapport à l'autre.

11. Procédé selon la revendication 9 dans lequel au moins un des premier et deuxième éléments d'antenne (30, 33) comprend :
une branche de source primaire (37) ; et
une branche en boucle (45) ayant une première extrémité (46, 51) couplée à ladite branche de source primaire, une deuxième extrémité (47, 52) adjacente à ladite branche de source primaire et séparée d'elle par un intervalle (48, 53) et une section de boucle de retour (49, 54) s'étendant entre les première et la deuxième extrémités.

12. Procédé selon la revendication 11 dans lequel la branche de source primaire (37) comprend les premier et un deuxième points de source primaire (31, 38) dans lequel la première extrémité (46) de ladite branche de boucle (45) est couplée au premier point de source primaire, et dans lequel la deuxième extrémité de branche de boucle est adjacente au deuxième point de source primaire.

13. Procédé selon la revendication 11 dans lequel la section de boucle de retour (49) de la branche en boucle (45) comprend au moins une partie arquée (55).
